# EUROPÄISCHE PATENTANMELDUNG

(11) **EP 0 910 995 A2**
(43) Veröffentlichungstag der Anmeldung: **28.04.1999**
(21) Anmeldenummer: 98119286.7
(22) Anmeldetag: 13.10.1998
(51) Int. Cl.: A61C 5/06, B05C 17/005, B05C 17/01, B65D 81/32

(54) **Dentales Handgerät zum Mischen und Ausbringen einer Mehrkomponenten-Formmasse**

(30) Priorität: 15.10.1997 DE 19745614
(71) Anmelder: zwingenberger, Arthur, 6006 Luzern (CH)
(72) Erfinder: zwingenberger, Arthur, 6006 Luzern (CH)
(74) Vertreter: Borchert, Uwe Rudolf, Dipl.-Ing.

(57) **Zusammenfassung**

Die Erfindung betrifft ein dentales Handgerät (10) zum Mischen und Ausbringen einer Mehrkomponenten-Formmasse mit einer mittels eines Antriebs betätigbare Kolben (58, 60) aufweisenden Aufnahme (16) für zumindest zwei mit den Einzelkomponenten der Mehrkomponenten-Formmasse gefüllten Folienbeuteln (22, 24), auf die der Kolben (58, 60) einwirkt, einem statischen Mischer (30) und einem mit den Folienbeuteln (22, 24) fest verbundenen Kopfstück (28), das getrennte, zu den Folienbeuteln (22, 24) hin offene Strömungskanäle (52) aufweist, die in den statischen Mischer (30) führen. Der statische Mischer (30), das Kopfstück (28) und die Folienbeutel (22, 24) bilden erfindungsgemäß eine Baueinheit (32), die insbesondere als Einwegartikel in die Aufnahme (16) ein- und ausbringbar ist.

## Beschreibung

Die Erfindung betrifft ein dentales Handgerät für eine Vorrichtung zum Mischen und Ausbringen einer Mehrkomponenten-Formmasse.

Aus der EP-OS 0 663 348 A1 ist eine Vorrichtung zum Entleeren eines Folienschlauches bekannt, der an seinem vorderen Ende mit einem Ring versehen ist, dessen Randbereich den Innendurchmesser einer den Folienschlauch aufnehmenden Kartusche überschreitet. Der Ring weist eine konische Dichtfläche auf, die mit einer im inneren einer Kappe ausgebildeten Dichtkante zusammenwirkt. Bei Inbetriebnahme wird die Kappe mit ihrem hinteren zylindrischen Endbereich auf einen vorderen Endbereich der Kartusche aufgeschoben, wobei der im Folienschlauch vorgesehene Ring mit einer Dichtfläche in Axial- und Radialrichtung zentriert und ausgerichtet wird, um einen ordnungsgemäßen Eingriff zwischen Dichtkante und Dichtfläche zu gewährleisten. Die Kappe wird von einer Ausbringöffnung durchsetzt. Diese Vorrichtung wird auch zur Herstellung von Mehrkomponentengemischen verwendet.

In der EP-OS 0 541 972 A1 ist ein Behälter für eine Zweikomponentenmasse offenbart. Für jede der Komponenten ist ein Folienschlauch vorgesehen, der jeweils mit Klammern auf jeder Seite verschlossen ist und jeweils auf einer Seite einen Ring aufweist, der mit dem Folienschlauch verklebt ist. Jeder der Folienschläuche ist in eine von zwei zylindrische Kammern eines Doppelzylinders eingelegt. An einer Stirnseite des Doppelzylinders ist ein Kopfstück vorgesehen, das für jede der Gehäusekammern jeweils mit einer Ausbringöffnung versehen ist. Beide Ausbringöffnungen sind als gekröpfte Strömungskanäle ausgebildet, die dicht nebeneinander liegend in einer Düse münden. Zur Befestigung der Düse an dem Kopfstück ist ein Bajonettverschluß oder ein Schraubverschluß vorgesehen. Die Düse ist als statischer Mischer ausgebildet.

In der DE 296 06 463 U1 wird eine Vorrichtung zum Entleeren eines Schlauchbeutels offenbart, die ein Kopfstück aufweist, in dem zwei Schlauchbeutel angeordnet sind. Die Schlauchbeutel bilden eine Baueinheit, in dem die Schlauchbeutel mit dem Flansch des Kopfstückes verklebt sind. Zwei getrennte Strömungskanäle führen zu einem Mischkopf, der auf den Nippel aufgesteckt wird.

In der DE 43 35 970 A1 ist ebenfalls ein Kopfstück mit zwei Folienbeuteln als Baueinheit ausgeführt, wobei auf den Austrittsstutzen ein statischer Mischer aufschraubbar ist.

Um zu vermeiden, daß bei aushärtbaren Zweikomponentenmassen die Kopfstücke, insbesondere die Strömungskanäle, verstopfen, sind jeweils die Hälften des Kopfstückes farblich gekennzeichnet, so daß der Benutzer jede Komponente einer Formmasse stets auf der gleichen Seite des Kopfstücks anordnet. Hierdurch soll vermieden werden, daß jede Komponente bereits innerhalb der Ausbringöffnungen in Kontakt mit Resten der anderen Komponente gerät, dadurch aushärtet und die Ausbringöffnungen sowie den statischen Mischer verstopfen.

Wie die Erfahrung gezeigt hat, sind solche Ausbildungen von Vorrichtungen nicht nur aufwendig und teuer in der Herstellung, sondern auch unbefriedigend im Gebrauch. Bekanntlich muß für jeden Mischvorgang zur Erzeugung einer Formmasse, beispielsweise einer aushärtbaren Abdruckmasse für zahnärztliche Zwecke, ein neuer Mischer auf das Kopfstück aufgesetzt werden, da zwischen zwei Anwendungen, wenn diese nicht unmittelbar nacheinander erfolgen, ein Aushärten der miteinander vermischten Komponenten im statischen Mischer erfolgt.

Bisher muß der statische Mischer immer mit dem Kopfstück verbunden bleiben, um ein Austrocknen und Vermischen der Komponenten nach dem Gebrauch zu vermeiden. Die statischen Mischer werden erst vor dem nächsten Gebrauch ausgewechselt. Der durch Blut, Bakterien usw. kontaminierte statische Mischer stellt vor seiner Auswechslung vor einem erneuten Gebrauch einen permanenten Infektionsherd dar. Zudem muß der Zahnarzt den kontaminierten statischen Mischer zum Auswechseln anfassen, wodurch die Gefahr der Infektion des neuen Patienten gegeben ist.

Beim Wechseln des statischen Mischers erfolgt jeweils eine Bewegung quer zur geteilten Öffnung, wobei unbeabsichtigt Komponenten im Öffnungsbereich miteinander vermischt werden und reagieren, d. h. sie verfestigen sich zu einem Pfropfen, der sowohl den Eingang zum statischen Mischer als auch den Strömungskanal des Kopfstückes verstopft. Zudem müssen die Folienbeutel jeweils ausgetauscht werden und man kommt über ihre Austrittsöffnungen in Kontakt mit den einzelnen Substanzen/Komponenten. Um auch hier ein ungewolltes Verkleben zu vermeiden, sind die Kopfstücke zu reinigen, was äußerst zeitaufwendig ist.

Teilweise werden die Kolben der Vorrichtung über einen Handhebel betätigt. Ein Applizierung mit ruhiger Hand ist dadurch nicht möglich.

Andererseits besteht in der täglichen Praxis, insbesondere bei Zahnärzten, ein Bedarf an sicher arbeitenden Vorrichtungen, die die Herstellung der genannten Abdruckmasse für zahnärztliche Zwecke in dem jeweils gewünschten Volumen wesentlich erleichtern. Ein Verkleben der Finger oder zahntechnischer Geräte durch die einzelnen Komponenten beim Austausch der Folienbeutel ist dabei äußerst unerwünscht.

Der Erfindung liegt die Aufgabe zugrunde, ein dentales Handgerät zum Mischen und Ausbringen einer Mehrkomponenten-Formmasse derart weiterzubilden, daß unter Vermeidung der genannten Nachteile die Betriebsbereitschaft der Vorrichtung auf einfache Weise gewährleistet werden kann.

Diese Aufgabe wird durch die Merkmale des Patentanspruches 1 gelöst.

Weitere vorteilhafte Ausgestaltungen bilden die Gegenstände der Unteransprüche.

Der Erfindung liegt die Erkenntnis zugrunde, daß durch Ausbilden sämtlicher mit den einzelnen Komponenten der Mehrkomponten-Formmasse in Berührung kommender Bauteile als eine unlösbar miteinander verbundene Baueinheit, die insbesondere als Einwegartikel ausgeführt ist, nicht nur die Gefahr der unerwünschten Verschmutzung durch die Einzelkomponenten oder ein miteinander Vermischen der Komponenten ausgeschlossen wird, sondern auch beim zahnärztlichen Einsatz die Gefahr der Kontamination deutlich verringert wird.

Die Erfindung betrifft ein dentales Handgerät, wobei der statische Mischer, das Kopfstück sowie die Folienbeutel eine unlösbar miteinander verbundene Baueinheit bilden, die insbesondere als Einwegartikel in die Aufnahme ein- und ausbringbar ist.

Hierdurch wird sichergestellt, daß beim zahnärztlichen Einsatz der möglicherweise mit Blut, Bakterien oder ähnlichem kontaminierte Mischer bei jedem Einsatz im wesentlichen steril ist und nach Gebrauch sofort entsorgt werden kann. Der Teil der Vorrichtung der in dem Mund des Patienten gelangt, nämlich der Mischer und evtl. das Kopfstück, wird jedesmal erneuert.

Gemäß einer weiteren Ausführungsform der Erfindung wird ein Eintreten des von dem Folienbeutel gelösten Klemmstücks in den statischen Mischer dadurch verhindert, daß zwischen Kammer und statischem Mischer ein Gitter, Sieb oder ähnliches zwischengeschaltet ist. Insbesondere sind dabei der Mischer, das Gitter, das Sieb oder ähnliches einstückig ausgebildet.

Um sowohl eine sichere Verbindung zwischen dem Kopfstück und den Folienbeuteln zu gewährleisten als auch ein unerwünschtes Beschädigen der Folienbeutel durch das Kopfstück bei Belastung zu verhindern, weist das Kopfstück auf seiner den Folienbeuteln zugewandten Seite symmetrisch zu den Eintrittsöffnungen des statischen Mischers angeordnete, der Form der gefüllten Folienbeutel angepaßte Aufnahmeflächen auf, mit denen die Folienbeutel fest verbunden, insbesondere verklebt, verschweißt oder ähnliches sind.

Gemäß einer Ausführungsform der Erfindung ist zumindest das dem Kopfstück zugewandte Ende des Folienbeutels mit einem Klemmittel, wie einem Clip oder ähnlichem verschlossen, der sich mit steigendem Innendruck des Folienbeutels von diesem löst und eine Ausbringöffnung im Folienbeutel freigibt. Hierdurch wird erreicht, daß auf der einen Seite der Folienbeutel sicher verschlossen und auf der anderen Seite bei Bedarf einfach geöffnet werden kann.

Gemäß einer alternativen Ausführungsform der Erfindung ist das dem Kopfstück zugewandte Ende des Folienbeutels mit einer Materialschwächung in der Folie des Folienbeutels versehen, die als Sollbruchstelle dient und sich mit steigendem Innendruck des Folienbeutels öffnet.

Die Schwächung kann beispielsweise durch Laserabtrag hergestellt werden. Dabei muß die Schwächung so ausgeführt sein, daß auf der einen Seite mit Aufplatzen des Folienbeutels eine ausreichend große Öffnung entsteht, auf der anderen Seite keine Folienteile sich vom Folienschlauch lösen, die das Austreten der Komponente beeinträchtigen.

Zusätzliche Vorteile und Merkmale ergeben sich aus der folgenden Beschreibung mehrerer Ausführungsformen der Erfindung im Zusammenhang mit der Zeichnung. Es zeigen:
- Fig. 1: eine perspektivische Ansicht des Handgerätes gemäß einer Ausführungsform der Erfindung mit nicht eingesetzten Folienbeuteln, Kopfstück und statischem Mischer in der Aufnahme;
- Fig. 2: eine perspektivische Detailansicht der Baueinheit aus Kopfstück, statischem Mischer und geleerten Folienbeuteln, wobei die Spitze hierbei abgewinkelt ausgeführt ist;
- Fig. 3: eine perspektivische Ansicht des betriebsbereiten Handgeräts von Fig. 1;
- Fig. 4: eine Schnittansicht der Baueinheit aus statischem Mischer, Kopfstück und den beiden Folienbeuteln;
- Fig. 5: eine Querschnittsansicht durch das Handgerät von Fig. 1;
- Fig. 6: eine vergrößerte Teilansicht von Fig. 5;
- Fig. 7: eine Schnittansicht der Kolben, der Folienbeutel, des Kopfstückes und des statischen Mischers von Fig. 5, wobei die Folienbeutel teilweise entleert sind;
- Fig. 8: eine Längsschnittansicht des Handgeräts;
- Fig. 9: eine Rückansicht des Handgeräts mit Teilschnitt;
- Fig. 10: eine perspektivische Explosionsdarstellung der Antriebsteile und Kolben des Handgeräts von Fig. 1;
- Fig. 11: eine perspektivische Darstellung des Handgeräts mit einem alternativen Antrieb;
- Fig. 12: eine perspektivische Ansicht des Gehäuses des Antriebes von Fig. 11; und
- Fig. 13: eine perspektivische Ansicht der verschiedenen Kombinationsmöglichkeiten des Handgeräts.

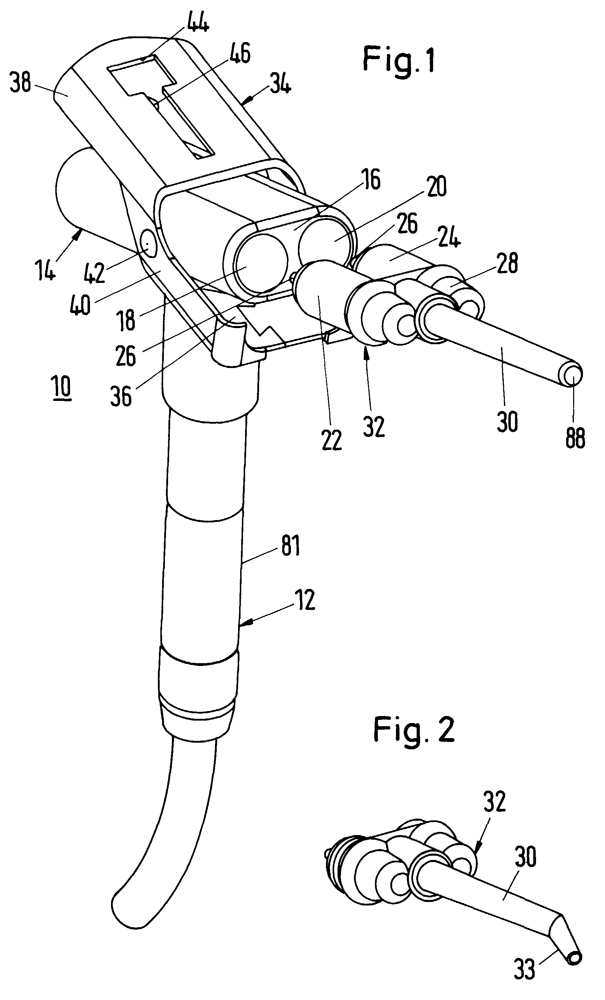

In Fig. 1 ist ein Handgerät 10 nach der Erfindung dargestellt. Das Handgerät 10 ist an einem von dem Handgerät 10 über eine erste Kupplung 82 abkuppelbaren elektromotorischen Rotationsantrieb 12 angeschlossen, der mit einer hier nicht dargestellten Steuereinrichtung zusammenwirkt. Alternativ hierzu kann auch ein durch Druckluft betriebener Lamellenmotor als Rotationsantrieb verwendet werden.

Das Handgerät 10 weist ein Gehäuse 14 auf, das eine Aufnahme 16 umfaßt. Die Aufnahme 16 besteht aus zwei voneinander getrennten zylindrischen Kammern 18 und 20, die zur Aufnahme von Folienschläuchen 22 und 24 dienen.

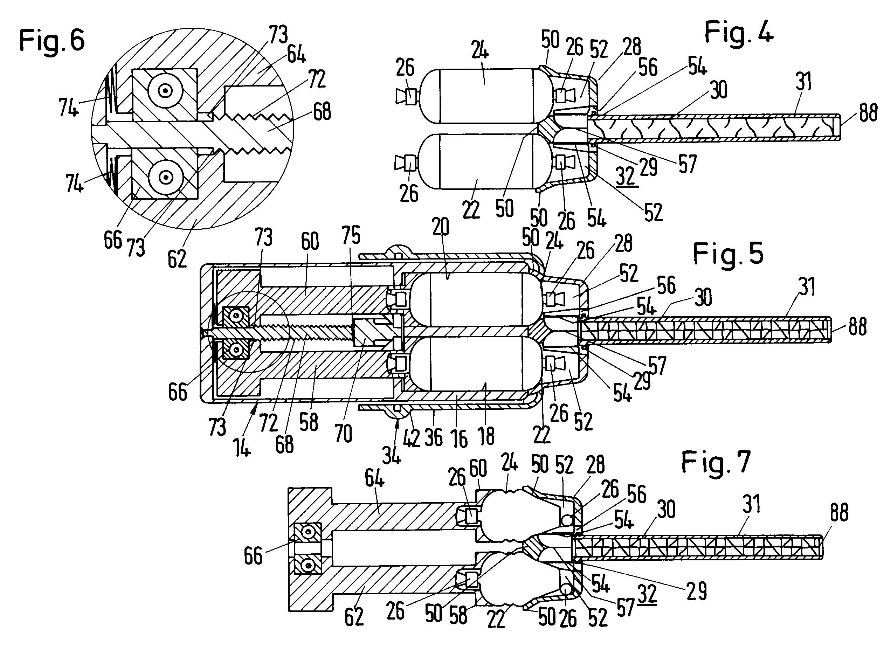

Ein Folienschlauch 22, 24 ist an seinen beiden Enden jeweils mit einer Klammer 26 verschlossen; siehe auch Fig. 4 bis 7, die zum besseren Abgleiten von dem Ende des entsprechenden Folienschlauches 22, 24 mit Teflon beschichtet sein kann.

Die beiden Folienschläuche 22 und 24 enthalten Komponenten einer Mehrkomponenten-Formmasse, wie dentales Abdruckmaterial, und sind mit einem Kopfstück 28 verbunden. Das Kopfstück 28 weist auf seiner den Folienschläuchen 22, 24 entfernt gelegenen Seite einen statischen Mischer 30 auf, der in dem Kopfstück 28 fest integriert ist und aus diesem in Richtung der den Folienschläuchen 22, 24 entfernt gelegenen Seite stabförmig herausragt.

Die Außenhülle 31 des statischen Mischers 30 ist gegenüber der Basis 29 drehbar ausgebildet. Hierdurch kann insbesondere eine auf dem statischen Mischer 30 angeordnete abgewinkelte Düse 33 - Fig. 2 - in entsprechende Bearbeitungspositionen ausgerichtet werden, wodurch beispielsweise beim Anwenden des Handgeräts in Zusammenhang mit Abdruckmaterial im dentalen Einsatz dessen Applikation im interproximalen sowie im lingualen oder buccalen Bereich erleichtert wird.

Die Folienschläuche 22 und 24, das Kopfstück 28 sowie der statische Mischer 30 bilden eine unlösbar miteinander verbundene Baueinheit, die nach Gebrauch aus dem Handgerät 10 entfernt und weggeworfen wird. Im folgenden wird diese Baueinheit als Einwegeinheit 32 bezeichnet.

Die Einwegeinheit 32 wird in die Aufnahme 16 so eingebracht, daß die Folienschläuche 22 und 24 in die zugeordneten Kammern 18 und 20 eingreifen und das Kopfstück 28 auf der Stirnseite der Aufnahme 16 aufliegt.

Die Einwegeinheit 32 kann durch einen Halter 34 in der Aufnahme 16 gesichert werden.

Der Halter 34 ist um eine Achse schwenkbar, die sich quer zur Längsachse der Aufnahme 16 bzw. der Kammern 18 und 20 erstreckt und weist einen unterhalb der Aufnahme 16 angeordneten Halterteil 36 sowie ein oberhalb der Aufnahme 16 angeordneten Halterteil 38 auf.

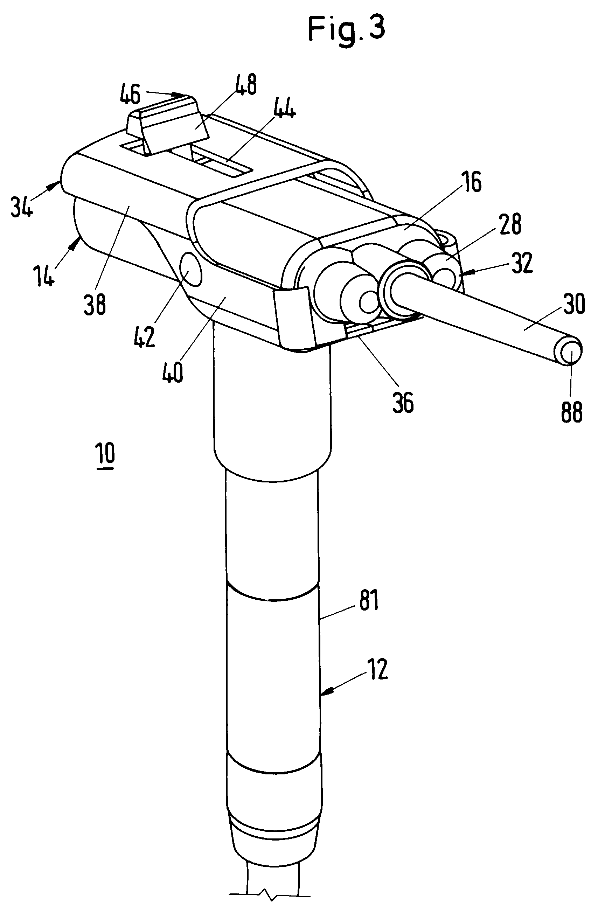

Das untere Halteteil 36 erstreckt sich unterhalb der Aufnahme 16 in Längsrichtung der Aufnahme 16 über die Aufnahme 16 hinaus und umgreift bereichsweise das Kopfstück 28 der in die Aufnahme 16 eingebrachten Einwegeinheit 32, siehe Fig. 3. Auf diese Weise ist die Einwegeinheit 32 in dem Gehäuse 14 des Handgeräts 10 gesichert.

Seitlich an dem unteren Halterteil 36 ist ein Steg 40 vorgesehen, der bei geschlossenem Halter 34 sich parallel zur Aufnahme 16 bis zum Anlenkpunkt 42 des Halters 34 jeweils seitlich der Aufnahme 16 erstreckt und das obere Halterteil 38 und das untere Halterteil 36 miteinander verbindet. Das untere Halterteil 36 erstreckt sich somit von dem Anlenkpunkt 42 in Richtung Einwegeinheit 32, wohingegen das obere Halterteil 38 sich von dem Anlenkpunkt 42 in Richtung auf die der Einwegeinheit 32 entfernt gelegene Seite des Gehäuses 14 erstreckt.

Der Halter 34 ist um seine Anlenkpunkte 42 aus einer die Einwegeinheit 32 in der Aufnahme 16 haltenden Schließstellung - Fig. 3 - in eine die Einwegeinheit 32 freigebende Öffnungsstellung und umgekehrt verschwenkbar - Fig. 1 -.

In der Schließstellung liegt das obere Halterteil 38 an der Oberseite der Aufnahme 16 und das untere Halterteil 36 an der Unterseite der Aufnahme 16 an.

In dem oberen Halterteil 38 ist eine T-förmige Ausnehmung 44 eingebracht. Die T-förmige Ausnehmung 44 ist einer zweiten Kupplung 46 und einer Raste 48 zugeordnet, dessen Funktion im Zusammenhang mit dem Antrieb 12 weiter unten noch erläutert wird.

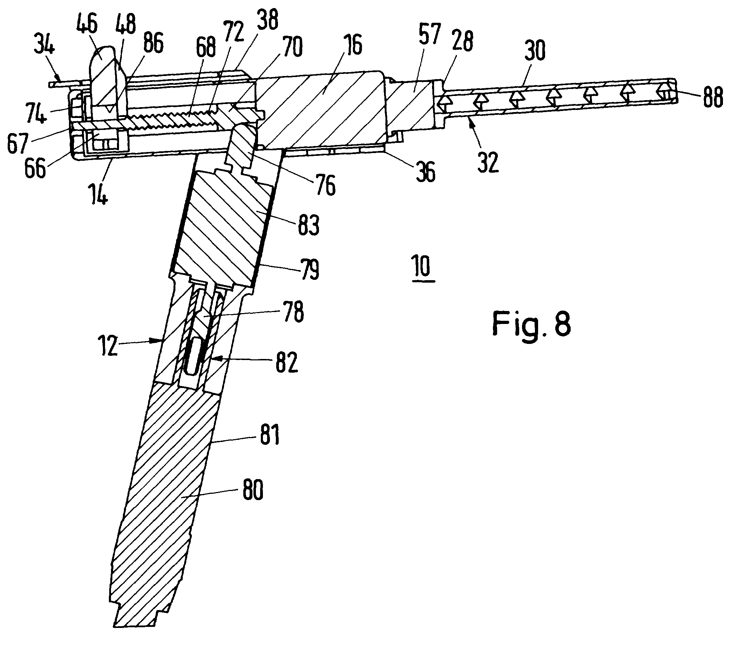

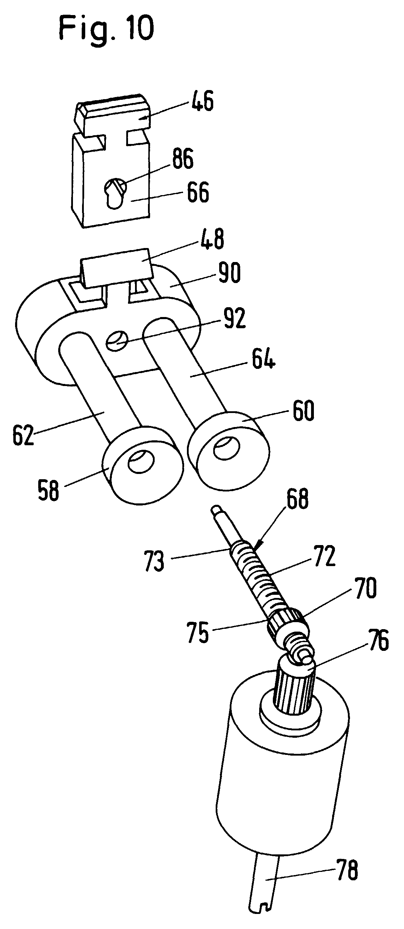

Vor der zweiten Kupplung 46 ist eine mit einem Endteil 90 - siehe Fig. 8 und 10 - verbundene Raste 48 angeordnet, die sich nach unten verbreitert. Mit dieser wird der Halter 34 in seiner Schließstellung arretiert. Parallel zur Längsachse der Aufnahme 16 ist das Endteil 90, in dem die zweite Kupplung 46 eingebracht ist, in Richtung der Einwegeinheit 32 federbelastet - Feder 74 gemäß Fig. 6 -, so daß mit Schließen des Halters 34 das Endteil 90 über die Raste 48 und die zweite Kupplung 46 zunächst gegen die Federkraft durch das obere Halterteil 36 nach hinten und mit Passieren der Raste 48 der Ausnehmung 44 des Halters 34 die zweite Kupplung 46 und das Endteil 90 mit der Raste 48 wieder nach vorne bewegt wird. Durch die Raste 48 wird ein Zurückverschwenken des Halters 34 in die Öffnungsstellung verhindert.

Nach Gebrauch des Handgeräts 10 wird die zweite Kupplung 46 und darüber das Endteil 90 mit der Raste 48 gegen die Federkraft nach hinten gedrückt und die Raste 48 kann durch die Ausnehmung 44 mit Verschwenken des Halters 34 hindurchtreten. Die Einwegeinheit 32 wird frei und kann ausgewechselt werden.

In Fig. 2 ist eine gebrauchte Einwegeinheit 32 perspektivisch dargestellt, wobei der statische Mischer 30, wie oben erwähnt, mit einer abgewinkelten Düse 33 versehen ist.

Fig. 4 zeigt die Einwegeinheit 32 im Schnitt mit gefüllten Folienschläuchen 22 und 24. Die Folienschläuche 22, 24 sind an ihren Enden mit der Klammer 26 verschlossen. Ein freies Ende der Folienschläuche 22, 24 greift in das Kopfstück 28 ein, wobei jedem Folienschlauch 22, 24 ein Kranz 50 des Kopfstückes 28 zugeordnet ist. Der Kranz 50 ist an die Form des gefüllten Folienschlauches 22, 24 angepaßt und mit dem zugeordneten Folienschlauch 22, 24 verklebt, verschweißt oder ähnliches.

Das Kopfstück 28 weist jeweils einen das zugeordnete freie Ende des Folienschlauches 22 bzw. 24 mit dem statischen Mischer 30 verbindenden Strömungskanal 52 auf, der zunächst kammerförmig ausgebildet ist.

Dem statischen Mischer 30 ist für jede Kammer des Strömungskanals 52 ein Gitter 54 vorgeschaltet, das ein Eindringen der von den Folienschläuchen 22, 24 gelösten Klammern 26 oder Teilen der Folienschläuche 22, 24 in den statischen Mischer 30 verhindert.

Das den Kammern der Strömungskanäle 52 jeweils zugeordnete Gitter 54 ist mit dem statischen Mischer 30 einstückig ausgebildet. Der statische Mischer 30 mit dem Gitter 54 ist in eine Bohrung 56 im Kopfstück 28 eingebracht und mit dem Kopfstück 28 verklebt und somit unlösbar mit diesem verbunden. Das Gitter 54 erstreckt sich dabei über den gesamten Querschnitt des jeweils zugeordneten Strömungskanals 52.

Statische Mischer 30 weisen in ihrer Durchtrittsöffnung unterschiedliche Wendeln, Flanken oder ähnliches auf, die ein Durchmischen der beiden aus den Folienschläuchen 22 und 24 durch die Strömungskanäle 52 in den statischen Mischer 30 gelangenden Komponenten, beispielsweise eine Abdruckmasse für zahnärztliche Zwecke, ermöglichen. Je nach Konsistenz der Komponenten werden unterschiedliche Ausgestaltungen eines statischen Mischers 30 verwendet. Derartige statische Mischer 30 sind bekannt und werden daher nicht näher beschrieben.

Das Mischungsverhältnis der beiden Komponenten ist im vorliegenden Fall 1:1. Es kann aber auch unterschiedlich sein.

Die Komponenten der beiden Folienschläuche 22 und 24 werden erst im statischen Mischer 30 miteinander vermischt, d.h. die Strömungskanäle 52 halten die beiden Komponenten bis zum Eintritt in den statischen Mischer 30 voneinander getrennt. Hierfür ist eine die beiden Strömungskanäle 52 trennende Trennwand 57 vorgesehen.

Das Gehäuse 14 des Handgeräts 10 weist im vorderen Bereich die die zylindrischen Kammern 18, 20 aufweisende Aufnahme 16 auf. Im hinteren Bereich des Gehäuses 14 sind zwei Kolbenstangen 62 und 64 gelagert, an deren einem Ende jeweils ein Kolben 58, 60 vorgesehen ist. Ein Kolben 58, 60 greift in eine Kammer 18 bzw. 20 ein. Der Kolben 58, 60 ist jeweils in Richtung auf die Folienschläuche 22 und 24 gerichtete Öffnung des Strömungskanals 52 parallel zur Längsachse der Aufnahme 16 verschiebbar, siehe Fig. 5.

Der Kolben 58, 60 ist über seine Kolbenstange 62, 64 und dem die beiden Kolbenstangen 62, 64 verbindenden Endteil 90 - siehe Fig. 10 - mit einer Mutter 66 als Teil der zweiten Kupplung 46 verbunden, da, wie bereits ausgeführt wurde, die zweite Kupplung 46 in dem Endteil 90 angeordnet ist.

Der Kolben 58, 60 ist an die Form des dem Kopfstück 28 entfernt gelegenen freien Endes des gefüllten Folienschlauches 22, 24 angepaßt und umgreift die den Folienschlauch 22, 24 verschließende Klammer 26. Auf diese Weise wird verhindert, daß mit steigendem Innendruck im Folienschlauch 22, 24 die Klammer 26 sich vom Folienschlauch 22, 24 löst.

Mittig im Gehäuse 14 ist zwischen der Aufnahme 16 und der hinteren Gehäusewandung 67 eine Welle 68 gelagert, die im Bereich der Aufnahme 16 ein Stirnrad 70 und daran anschließend von der Aufnahme 16 weg verlaufend ein der Mutter 66 zugeordnetes Gewinde 72 aufweist. Das Gewinde 72 ist am Anfang 73 und am Ende 75 unterbrochen, so daß mit Erreichen des Anfangs 73 oder des Endes 75 die Mutter 66 durch die Welle 68 mit dem Gewinde 72 nicht mehr weiterbewegt wird. Hierdurch wird eine Beschädigung des Handgerätes 10 vermieden.

Die Kolbenstange 62, 64 und das Endteil 90 mit der Raste 48 ist durch eine Feder 74 jeweils in Richtung Folienschlauch 22, 24 belastet. Hierdurch wird sowohl die Raste 48 in einer den Halter 34 in der Schließstellung fixierenden Position gehalten als auch der Kolben 58, 60 gegen den zugeordneten Folienschlauch 22, 24 gedrückt, sobald die Einwegeinheit 32 in die Aufnahme 16 des Gehäuses 14 eingebracht ist. Zudem wird die Mutter 66 gegen das Ende des Gewindes 72 gedrückt.

In Fig. 5 und Fig. 6 ist die Position dargestellt, in der die zweite Kupplung 46 und das Endteil 90 mit der Raste 48 zum öffnen bzw. Schließen des Halters 34 nach hinten gedrückt ist. Sobald der Halter 34 verschlossen ist, drückt die Feder 74 die Kolbenstange 62, 64 in Richtung Kopfstück 28 und die Mutter 66 greift in das Gewinde 72 ein. Mit Drehen der Welle 68 wird die Mutter 66, die Kolbenstangen 62 und 64 sowie die Kolben 58 und 60 auf den Folienschlauch 22 bzw. 24 zubewegt.

In das Stirnrad 70 greift ein weiteres Stirnrad 76 ein. Das weitere Stirnrad 76 ist mit dem Rotationsantrieb 12 verbunden, dessen Drehachse zur Translationsachse der beiden Kolben 58 und 60 im Winkel angeordnet ist, siehe Fig. 8.

In Fig. 8 ist ein Längsschnitt durch das Handgerät 10 dargestellt, wobei hierbei die die Strömungskanäle 52 trennende Trennwand 57 vor dem statischen Mischer 30 und die die beiden zylindrischen Kammern 18 und 20 trennende Wand der Aufnahme 16 erkennbar ist.

Das weitere Stirnrad 76 ist mit dem Rotationsantrieb 12 über eine ISO-Kupplung 82 für dentale Hand- und Winkelstücke verbunden. Es können aber auch andere Kupplungen für Hand- und Winkelstücke verwendet werden. Hierfür greift das Gegenstück 78 der ISO-Kupplung 82 in einen ISO-Kupplungsansatz der ersten Kupplung 82 für dentale Hand- und Winkelstücke ein, der wiederum mit einem Dentalmotor 80 einer Zahnarzteinheit verbunden ist. Derartige Dentalmotoren 80 sind im Zusammenhang mit Hand- und Winkelstücke mit Fräs-, Bohr- und Schleifwerkzeugen für zahnärztliche Zwecke bekannt.

Über die erste Kupplung 82 kann das Handgerät 10 einfach und schnell von dem Dentalmotor 80 gelöst werden und dieser mit einem Hand- oder Winkelstück für zahnärztliche Zwecke verbunden werden.

Das Gehäuse 81 des Dentalmotors 80 sowie die erste Kupplung 82 und der im Hinblick auf Fig. 8 nach unten weisende Teil des Gehäuses 14 des Handgeräts 10 bilden zusammen eine Handhabe 79, mit der das Handgerät 10 einfach in entsprechende Bearbeitungspositionen am Patienten gebracht werden kann. In der Handhabe 79 ist ein das weitere Stirnrad 76 und das Gegenstück 78 der ersten Kupplung 82 verbindendes Reduziergetriebe 83 zwischengeschaltet, das mit einer Untersetzung von 250 oder 1000 zu 1 versehen ist.

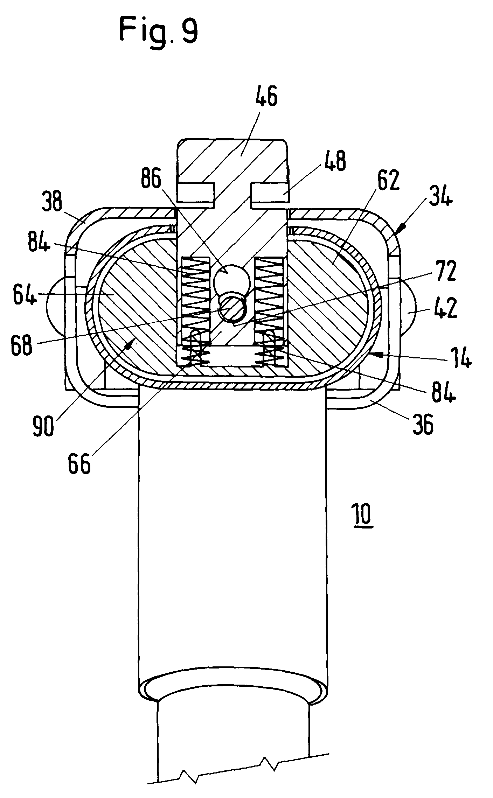

In Fig. 9 ist eine Rückansicht des Handgeräts 10 mit Teilschnitt dargestellt, wobei in dieser Darstellung die Ausbildung der zweiten Kupplung 46 verdeutlicht wird. Die zweite Kupplung 46 ist fest in dem die Kolbenstangen 62 und 64 verbindenden Endteil 90 gelagert und in vertikaler Richtung gegen die Kraft zweier Federn 84 beweglich.

Im unteren Bereich der zweiten Kupplung 46 ist die Mutter 66 vorgesehen, die die Welle 68 bereichsweise umgreift. Die Federn 84 drücken die Mutter 66 gegen die Welle 68. An der den Federn 84 gegenüberliegenden Seite der nach oben offenen Mutter 66 schließt sich eine Ausnehmung 86 an, die größer als die Welle 68 ausgeführt ist.

In der in Fig. 9 dargestellten Position greift die Mutter 66 in das Gewinde 72 der Welle 68 ein. Mit Drehen des Antriebsmotors 80 wird über die erste Kupplung 82, das Reduktionsgetriebe 83 und das Stirnrad 76 bewegt, welches wiederum das Stirnrad 70 und somit die Welle 68 antreibt. Mit Drehen der Welle 68 wird die Mutter 66 zusammen mit der zweiten Kupplung 46, den damit verbundenen Endteil 90, die Kolbenstangen 62 und 64 und die damit verbundenen Kolben 58 und 60 in Richtung auf die Öffnung der den Folienschläuchen 22 und 24 Zugewandten Strömungskanäle 52 bewegt.

In den Folienschläuchen 22 und 24 steigt damit parallel der Innendruck so stark, daß sich jeweils die Klammer 26 von dem Folienschlauch 22 und 24 löst, die in den Folienschläuchen 22 und 24 eingebrachten Komponenten durch die Strömungskanäle 52 in den statischen Mischer 30 gedrückt und dort vermischt werden. Über die Austragsdüse 88 wird die gemischte im vorliegenden Fall Zweikomponenten-Formmasse, beispielsweise eine Abdruckmasse für zahnärztliche Zwecke, ausgebracht.

Alternativ hierzu können die Folien der Folienschläuche 22, 24 im Endbereich geschwächt ausgebildet sein, beispielsweise durch Laserabtag. Der Abtrag erstreckt sich beispielsweise linienartig nahezu über den Umfang, aber nicht ganz. Hierdurch wird erreicht, daß das aufgebrochene Ende des Folienschlauches 22, 24 mit dem Folienschlauch 22, 24 verbunden bleibt. Das Gitter 54 wird somit nicht verschlossen und der Austrag der Komponenten aus den Folienschläuchen 22, 24 in dem statischen Mischer 30 nicht behindert.

Nach Gebrauch wird die Einwegeinheit 32 in der beschriebenen Weise aus dem Handgerät 10 entfernt und eine neue, mit gefüllten Folienschläuchen 22 und 24 eingebracht.

Damit die Kolben 58 und 60 bei einer neu eingebrachten Einwegeinheit 32 wiederum den vollen Hub zur Verfügung haben, wird die zweite Kupplung 46 gegen die Federn 84 nach unten gedrückt. Die Welle 68 wird dadurch in der Ausnehmung 86 der Mutter 66 angeordnet. Die zweite Kupplung 46 mit den Kolbenstangen 62 und 64 sowie den Kolben 58 und 60 kann nunmehr gegen die Feder 74 in Richtung hintere Gehäusewandung 67 verfahren werden. Wird die zweite Kupplung 46 freigegeben, greift die Mutter 66 aufgrund der Kraft der Feder 74 und 84 wieder in das Gewinde 72 ein und kann mit Drehen der Welle 68 wiederum die Kolben 58 und 60 gegen die Folienschläuche 22 und 24 bewegen.

In Fig. 10 sind in einer perspektivischen Explosionsdarstellung die Antriebsteile im Einzelnen noch einmal gezeigt. Hier wird deutlich, daß die Kolbenstangen 62 und 64 in das gemeinsame Endteil 90 eingreifen, in dem die zweite Kupplung 46 gelagert ist und das Endteil 90 die Raste 48 umfaßt.

Es dürfte klar sein, daß die in dem Endteil 90 dargestellte Bohrung 92 größer als die Welle 68 ist.

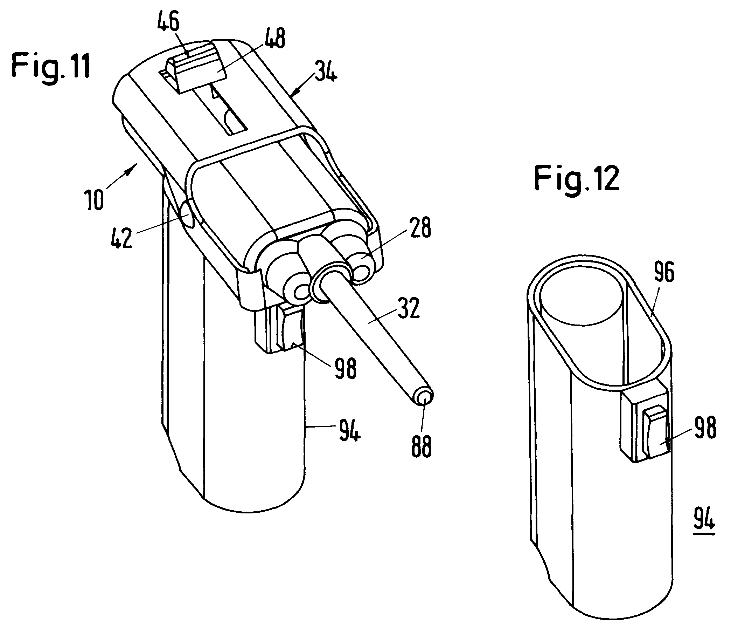

In den Fig. 11 und 12 ist eine alternative Antriebseinheit dargestellt, wobei ansonsten das Handgerät 10 in der bereits beschriebenen Weise aufgebaut ist. Die Antriebseinheit 94 umfaßt einen Batterie betriebenen, in einem Motorgehäuse 96 gelagerten Motor, der ebenfalls eine erste Kupplung für Hand- und Winkelstücke 104 aufweist. Das Motorgehäuse 96 ist zur Aufnahme von Batterien oder Akkus ausgebildet. Über einen Schalter 98 wird der Motor gesteuert.

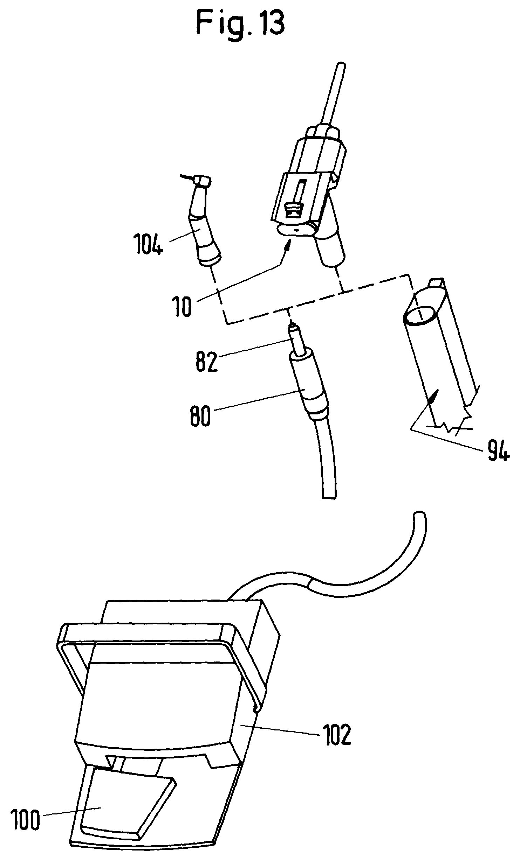

In Fig. 13 wird die flexible Ausgestaltung des Handgeräts 10 nach der Erfindung deutlich. Der Dentalmotor 80 einer Zahnarzteinheit ist in bekannter Weise mit einer ein Fußpedal 100 aufweisenden Steuereinheit 102 verbunden, mit der der Motor 80 gesteuert wird. An die dem Motor 80 nachgeschaltete erste Kupplung 82 kann ein Winkelstück 104 für zahnärztliche Zwecke oder eben das erfindungsgemäße Handgerät 10 angeschlossen werden.

Mit dem Handgerät 10 können somit Abdruckmassen, die aus zwei oder mehr aushärtbaren Komponenten bestehen, vom Zahnarzt einfach und steril appliziert werden.

Ein weiterer Vorteil ist auch darin zu sehen, daß der Zahnarzt über das Fußpedal 100 die ausbringbare Menge an Formmasse über die Motordrehzahl steuern kann, ohne daß hierfür eine zahnärztliche Hand benötigt wird oder Kraft aufgewendet werden muß. Der Zahnarzt kann sich voll und ganz auf das Einbringen der Abdruckmasse in den Behandlungsbereich des Patienten konzentrieren. Zudem wird sein in der Praxis sowieso vorhandener Dentalmotor 80 der Zahnarzteinheit besser genutzt.

Steht ein Dentalmotor 80 nicht zur Verfügung, kann auf die batteriebetriebene Antriebseinheit 94 ausgewichen werden.

Die Erfindung zeichnet sich durch ihre einfache Konstruktion und die breite Anwendungsmöglichkeit aus.

### Bezugszeichenliste

- 10: Handgerät
- 12: Rotationsantrieb
- 14: Gehäuse
- 16: Aufnahme
- 18: Kammer - links
- 20: Kammer - rechts
- 22: Folienschlauch - links
- 24: Folienschlauch - rechts
- 26: Klammer
- 28: Kopfstück
- 29: Basis
- 30: Statischer Mischer
- 31: Außenhülle
- 32: Einwegeinheit
- 33: Düse
- 34: Halter
- 36: Halterteil - unten
- 38: Halterteil - oben
- 40: Steg
- 42: Anlenkpunkt
- 44: Ausnehmung
- 46: zweite Kupplung
- 48: Raste
- 50: Kranz
- 52: Strömungskanal
- 54: Gitter
- 56: Bohrung
- 57: Trennwand
- 58: Kolben
- 60: Kolben
- 62: Kolbenstange
- 64: Kolbenstange
- 66: Mutter
- 67: hintere Gehäusewandung
- 68: Welle / Abtriebswelle
- 70: Stirnrad
- 72: Gewinde
- 73: Anfang des Gewindes
- 74: Feder
- 75: Ende des Gewindes
- 76: weiteres Stirnrad
- 78: Gegenstück
- 80: Dentalmotor
- 81: Motorgehäuse
- 82: erste Kupplung
- 83: Reduktionsgetriebe
- 84: Feder
- 86: Ausnehmung
- 88: Austragsdüse
- 90: Endteil
- 92: Bohrung
- 94: Antriebseinheit
- 96: Motorgehäuse
- 98: Schalter
- 100: Pedal
- 102: Steuereinheit
- 104: Winkelstück

## Patentansprüche

1. Dentales Handgerät zum Mischen und Ausbringen einer aus Einzelkomponenten bestehenden Mehrkomponenten-Formmasse für zahnärztliche Zwecke, das eine mittels eines Antriebs betätigbare Kolben (58, 60) umfassende Aufnahme (16) sowie zumindest zwei mit den Einzelkomponenten gefüllte Folienbeutel (22, 24) aufweist, mit einem statischen Mischer (30), in den die Einzelkomponenten aus den Folienbeuteln (22, 24) überführbar sind, deren verschlossene Enden bei steigendem über die Kolben (58, 60) erzeugten Innendruck sich öffnen, und mit einem Kopfstück (28), das auf seiner den Folienbeuteln (22, 24) zugewandten Seite symmetrisch zu den Eintrittsöffnungen des statischen Mischers (30) angeordnete, der Form der gefüllten Folienbeutel (22, 24) angepaßte Aufnahmeflächen (50) aufweist, mit denen die Folienbeutel (22, 24) fest verbunden sind, und das als seine integralen Bestandteile mindestens zwei getrennte, zu den Folienbeuteln (22, 24) hin offene Strömungskanäle (52) umfaßt, die mit dem statischen Mischer (30) kommunizieren, wobei der statische Mischer (30), das Kopfstück (80) sowie die Folienbeutel (22, 24) eine unlösbar miteinander verbunde Baueinheit (32) bilden, die insbesondere als Einwegartikel in die Aufnahme (16) ein- und ausbringbar ist.

2. Dentales Handgerät nach Anspruch 1, **dadurch gekennzeichnet,** daß zwischen den Strömungskanälen (52) und dem statischem Mischer (30) ein Gitter (54), Sieb oder ähnliches zwischengeschaltet ist.

3. Dentales Handgerät nach Anspruch 2**, dadurch gekennzeichnet,** daß zumindest ein Teil des statischen Mischers (30) und das Gitter (54), Sieb o. ä. einstückig ausgebildet sind.

4. Dentales Handgerät nach Anspruch 2 oder 3, **dadurch gekennzeichnet,** daß jeder Strömungskanal (52) sich jeweils im wesentlichen senkrecht zur Längsachse des Folienbeutels (22, 24) bis zum Gitter (54) und nach dem Gitter (54) sich im wesentlichen in Längsrichtung des statischen Mischers (30) erstreckt.

5. Dentales Handgerät nach einem der vorangehenden Ansprüche, **dadurch gekennzeichnet,** daß zumindest das dem Kopfstück (28) zugewandte Ende des Folienbeutels (22, 24) mit einem Klemmittel (26), wie einem Clip oder ähnlichem, verschlossen ist, der sich mit steigendem Innendruck des Folienbeutels (22, 24) von diesem löst und eine Ausbringungsöffnung im Folienbeutel (22, 24) freigibt.

6. Dentales Handgerät nach einem der vorangehenden Ansprüche, **dadurch gekennzeichnet,** daß das dem Kopfstück (28) zugewandte Ende des Folienbeutels (22, 4) mit einer Materialschwächung in der Folie des Folienbeutels (22, 24) versehen ist, die als Sollbruchstelle dient und sich mit steigendem Innendruck des Folienbeutels (22, 24) öffnet.

7. Dentales Handgerät nach einem der vorangehenden Ansprüche, **dadurch gekennzeichnet,** daß der statische Mischer (30) eine Außenhülle (31) und eine Basis (29) aufweist und die Außenhülle (31) gegenüber der Basis (29) drehbar gelagert ist.

8. Dentales Handgerät nach einem der vorangehenden Ansprüche, **gekennzeichnet durch** einen statischen Mischer (30) mit einer abgewinkelten Düse (33).
